# EUROPEAN PATENT APPLICATION

(11) **EP 4 485 224 A1**
(43) Date of publication of application: **01.01.2025**
(21) Application number: 23784061.6
(22) Date of filing: 04.01.2023
(51) Int. Cl.: G06F 16/27, G06F 3/06

(54) **METHOD FOR PROCESSING READ REQUEST, DISTRIBUTED DATABASE AND SERVER**

(30) Priority: 07.04.2022 CN 202210362845
(71) Applicant: Huawei Technologies Co., Ltd., Shenzhen, Guangdong 518129 (CN)
(72) Inventor: BAO, Peng, Shenzhen, Guangdong 518129 (CN); MA, Jiahao, Shenzhen, Guangdong 518129 (CN)
(74) Representative: Körber, Martin Hans
(86) International application number: PCT/CN2023/070437
(87) International publication number: WO 2023/193495

(57) **Abstract**

This application provides a method for processing a read request, a distributed database, and a server side. The method is applied to a distributed database for disaster recovery. In the method, a slowest playback progress in a plurality of current playback progresses corresponding to a plurality of first nodes and a plurality of current playback progresses corresponding to a plurality of shards is used as a first target playback progress. Only if a current playback progress corresponding to a target shard is greater than or equal to the first target playback progress, a target node requests to read data from the target shard. This can avoid a case in which the target shard in the distributed database is unreadable. In addition, the method can ensure that data about a first application that is read by different target nodes associated with the first application is consistent, that is, ensure read consistency.

## Description

This application claims priority to Chinese Patent Application No. 202210362845.X, filed with the China National Intellectual Property Administration on April 7, 2022 and entitled "METHOD FOR PROCESSING READ REQUEST, DISTRIBUTED DATABASE, AND SERVER SIDE", which is incorporated herein by reference in its entirety.

### TECHNICAL FIELD

This application relates to the database field, and more specifically, to a method for processing a read request, a distributed database, and a server side.

### BACKGROUND

In a distributed database, data is scattered and then stored on different nodes. In this case, because the data is stored on different nodes, a method needs to be provided to ensure data read-write consistency.

### SUMMARY

This application provides a method for processing a read request, a distributed database, and a server side. The method may be applied to a disaster recovery scenario, and can resolve a data read consistency problem in the distributed database in the disaster recovery scenario.

According to a first aspect, a method for processing a read request, a distributed database, and a server side are provided. The method is applied to a distributed database for disaster recovery, and the distributed database includes a plurality of first nodes and a plurality of shards for storing data. The method includes: A target node in the plurality of first nodes determines a target shard from the plurality of shards based on a first read request received from a first application, where the target shard stores data requested to be read based on the first read request, and the target node is a node in the plurality of first nodes that has an association relationship with the first application. The target node obtains a first target playback progress and first target information, where the first target playback progress is a slowest playback progress in a plurality of current playback progresses corresponding to the plurality of first nodes and a plurality of current playback progresses corresponding to the plurality of shards, the first target information indicates whether the plurality of current playback progresses corresponding to the plurality of shards are greater than or equal to the first target playback progress, and the first target information corresponds to the first target playback progress. Then, if a current playback progress corresponding to the target shard is greater than or equal to the first target playback progress, the target node sends a second read request generated based on the first read request to the target shard, where the second read request carries the first target playback progress.

Based on the foregoing technical solution, the slowest playback progress in the plurality of current playback progresses corresponding to the plurality of first nodes and the plurality of current playback progresses corresponding to the plurality of shards is used as the first target playback progress. Only if the current playback progress corresponding to the target shard is greater than or equal to the first target playback progress, the target node requests to read data from the target shard. This can avoid a case in which the target shard in the distributed database is unreadable. In addition, for each target node associated with the first application, if the target node needs to obtain data from a plurality of target shards, the target shard obtains data whose playback progress is the first target playback progress from each target shard when obtaining data from the target shard. Therefore, the method can ensure that data obtained by a plurality of read requests from any target node associated with the first application is consistent.

In addition, all these target nodes read data whose playback progress is the first target playback progress from target shards corresponding to the target nodes. Therefore, based on the foregoing analysis, the method can ensure that data about the first application that is read by different target nodes associated with the first application is consistent, that is, ensure read consistency. It should be noted that the "target shards corresponding to the target nodes" may be understood as shards in which the data requested to be read based on the read requests received by the target nodes from the first application is distributed. With reference to the first aspect, in some implementations of the first aspect, the distributed database further includes a management module, and that the target node obtains the first target playback progress and the first target information includes: The target node obtains the first target playback progress and the first target information from the management module.

For example, the management module may be a global transaction manager (global transaction manager, GTM).

Based on the foregoing technical solution, the first target playback progress and the first target information are stored by using an original GTM in a distributed disaster recovery cluster, that is, no additional component needs to be added, so that implementation is simple and efficient.

With reference to the first aspect and the foregoing implementations, in some implementations of the first aspect, before the first target playback progress and the first target information arrive at the management module, a second target playback progress and second target information already arrive at the management module and are stored in the management module, and the second target information corresponds to the second target playback progress; and the method further includes: After the first target playback progress arrives at the management module, the management module updates a stored current playback progress from the second target playback progress to the first target playback progress, and updates stored target information from the second target information to the first target information, where the first target playback progress is greater than the second target playback progress.

Based on the foregoing technical solution, only if the first target playback progress is greater than the second target playback progress, the management module updates the stored current playback progress from the second target playback progress to the first target playback progress, and updates the stored target information from the second target information to the first target information. This allows target playback stored in the management module to consistently progress forward, avoids a rollback of the target playback progress stored in the management module, and ensures that the data read by the target node is the latest.

With reference to the first aspect and the foregoing implementations, in some implementations of the first aspect, a first node that determines the first target playback progress and the first target information is different from a first node that determines the second target playback progress and the second target information.

With reference to the first aspect and the foregoing implementations, in some implementations of the first aspect, each shard includes one second node and a plurality of replicas, and a current playback progress corresponding to the shard is determined based on a current playback progress corresponding to the second node included in the shard and a plurality of current playback progresses corresponding to the plurality of replicas.

With reference to the first aspect and the foregoing implementations, in some implementations of the first aspect, if a commit sequence number indicates a playback progress, the current playback progress corresponding to the shard is a median in the current playback progress corresponding to the second node and the plurality of current playback progresses corresponding to the plurality of replicas.

Based on the foregoing technical solution, the median in the current playback progress corresponding to the second node included in the shard and the plurality of current playback progresses corresponding to the plurality of replicas is used as the current playback progress corresponding to the shard. In this case, if the current playback progress corresponding to the shard is greater than or equal to the first target playback progress, it can be ensured that at least half of data nodes and/or half of the replicas in the shard are readable at a specific moment. In this case, when data is requested to be read in the shard based on a plurality of requests at the specific moment, because the at least half of the data nodes and/or half of the replicas in the shard are readable, a processing speed of these read requests may be improved.

With reference to the first aspect and the foregoing implementations, in some implementations of the first aspect, that the target node sends the second read request generated based on the first read request to the target shard includes: The target node sends the second read request to a first replica in the target shard, where a current playback progress corresponding to the first replica is greater than or equal to the first target playback progress, and the first replica is one of a plurality of replicas included in the target shard.

Based on the foregoing technical solution, a data node undertakes more work tasks than a replica. For example, the data node is responsible for synchronizing data of a primary cluster to the data node and the replica. Therefore, a read request is sent to the replica, so that the replica processes the read request. This avoids affecting a speed at which the data node synchronizes the data of the primary cluster, and avoids a problem that the primary cluster waits for the data node due to an excessively slow synchronization speed of the data node.

With reference to the first aspect and the foregoing implementations, in some implementations of the first aspect, the first application accesses the distributed database in a nearby access manner.

Based on the foregoing technical solution, in a remote disaster recovery scenario, that is, a scenario in which a distributed primary cluster is relatively far away from a distributed disaster recovery cluster, for example, the distributed primary cluster and the distributed disaster recovery cluster are scattered in different cities, in this method, the first application accesses the distributed disaster recovery cluster in the nearby access manner. In a "read/write separation" solution, a primary cluster first analyzes a received request, and if the request is a read request, the primary cluster sends the read request to a disaster recovery cluster. Compared with the "read/write separation" solution, the method provided in this application can reduce latency of processing the read request.

According to a second aspect, a distributed database is provided. The distributed database includes a plurality of first nodes and a plurality of shards for storing data. A target node in the plurality of first nodes is used to determine a target shard from the plurality of shards based on a first read request received from a first application, where the target shard stores data requested to be read based on the first read request, and the target node is a node in the plurality of first nodes that has an association relationship with the first application. The target node is further used to obtain a first target playback progress and first target information, where the first target playback progress is a slowest playback progress in a plurality of current playback progresses corresponding to the plurality of first nodes and a plurality of current playback progresses corresponding to the plurality of shards, the first target information indicates whether the plurality of current playback progresses corresponding to the plurality of shards are greater than or equal to the first target playback progress, and the first target information corresponds to the first target playback progress. The target node is further used to: if a current playback progress corresponding to the target shard is greater than or equal to the first target playback progress, send a second read request generated based on the first read request to the target shard, where the second read request carries the first target playback progress.

Based on the foregoing technical solution, the slowest playback progress in the plurality of current playback progresses corresponding to the plurality of first nodes and the plurality of current playback progresses corresponding to the plurality of shards is used as the first target playback progress. Only if the current playback progress corresponding to the target shard is greater than or equal to the first target playback progress, the target node requests to read data from the target shard. This can avoid a case in which the target shard in the distributed database is unreadable. In addition, for each target node associated with the first application, if the target node needs to obtain data from a plurality of target shards, the target shard obtains data whose playback progress is the first target playback progress from each target shard when obtaining data from the target shard. Therefore, the method can ensure that data obtained by a plurality of read requests from any target node associated with the first application is consistent.

In addition, all these target nodes read data whose playback progress is the first target playback progress from target shards corresponding to the target nodes. Therefore, based on the foregoing analysis, the method can ensure that data about the first application that is read by different target nodes associated with the first application is consistent, that is, ensure read consistency. It should be noted that the "target shards corresponding to the target nodes" may be understood as shards in which the data requested to be read based on the read requests received by the target nodes from the first application is distributed.

With reference to the second aspect, in some implementations of the second aspect, the distributed database further includes a management module, and when obtaining the first target playback progress and the first target information, the target node is specifically used to obtain the first target playback progress and the first target information from the management module.

For example, the management module may be a global transaction manager (global transaction manager, GTM).

Based on the foregoing technical solution, the first target playback progress and the first target information are stored by using an original GTM in a distributed disaster recovery cluster, that is, no additional component needs to be added, so that implementation is simple and efficient.

With reference to the second aspect and the foregoing implementations, in some implementations of the second aspect, before the first target playback progress and the first target information arrive at the management module, a second target playback progress and second target information already arrive at the management module and are stored in the management module, and the second target information corresponds to the second target playback progress; and the management module is configured to: after the first target playback progress arrives at the management module, update a stored current playback progress from the second target playback progress to the first target playback progress, and update stored target information from the second target information to the first target information, where the first target playback progress is greater than the second target playback progress.

Based on the foregoing technical solution, only if the first target playback progress is greater than the second target playback progress, the management module updates the stored current playback progress from the second target playback progress to the first target playback progress, and updates the stored target information from the second target information to the first target information. This allows target playback stored in the management module to consistently progress forward, avoids a rollback of the target playback progress stored in the management module, and ensures that the data read by the target node is the latest.

With reference to the second aspect and the foregoing implementations, in some implementations of the second aspect, a first node that determines the first target playback progress and the first target information is different from a first node that determines the second target playback progress and the second target information.

With reference to the second aspect and the foregoing implementations, in some implementations of the second aspect, each shard includes one second node and a plurality of replicas, and a current playback progress corresponding to the shard is determined based on a current playback progress corresponding to the second node included in the shard and a plurality of current playback progresses corresponding to the plurality of replicas.

With reference to the second aspect and the foregoing implementations, in some implementations of the second aspect, if a commit sequence number indicates a playback progress, the current playback progress corresponding to the shard is a median in the current playback progress corresponding to the second node and the plurality of current playback progresses corresponding to the plurality of replicas.

Based on the foregoing technical solution, the median in the current playback progress corresponding to the second node included in the shard and the plurality of current playback progresses corresponding to the plurality of replicas is used as the current playback progress corresponding to the shard. In this case, if the current playback progress corresponding to the shard is greater than or equal to the first target playback progress, it can be ensured that at least half of data nodes and/or half of the replicas in the shard are readable at a specific moment. In this case, when data is requested to be read in the shard based on a plurality of requests at the specific moment, because the at least half of the data nodes and/or half of the replicas in the shard are readable, a processing speed of these read requests may be improved.

With reference to the second aspect and the foregoing implementations, in some implementations of the second aspect, when sending the second read request generated based on the first read request to the target shard, the target node is specifically used to send the second read request to a first replica in the target shard, where a current playback progress corresponding to the first replica is greater than or equal to the first target playback progress, and the first replica is one of a plurality of replicas included in the target shard.

Based on the foregoing technical solution, a data node undertakes more work tasks than a replica. For example, the data node is responsible for synchronizing data of a primary cluster to the data node and the replica. Therefore, a read request is sent to the replica, so that the replica processes the read request. This avoids affecting a speed at which the data node synchronizes the data of the primary cluster, and avoids a problem that the primary cluster waits for the data node due to an excessively slow synchronization speed of the data node.

With reference to the first aspect and the foregoing implementations, in some implementations of the first aspect, the first application accesses the distributed database in a nearby access manner.

Based on the foregoing technical solution, in a remote disaster recovery scenario, that is, a scenario in which a distributed primary cluster is relatively far away from a distributed disaster recovery cluster, for example, the distributed primary cluster and the distributed disaster recovery cluster are scattered in different cities, in this method, the first application accesses the distributed disaster recovery cluster in the nearby access manner. In a "read/write separation" solution, a primary cluster first analyzes a received request, and if the request is a read request, the primary cluster sends the read request to a disaster recovery cluster. Compared with the "read/write separation" solution, the method provided in this application can reduce latency of processing the read request.

According to a third aspect, this application provides a server side. The distributed database provided in this application is deployed on the server side, and the server side includes a processor, a memory, and one or more computer programs. The one or more computer programs are stored in the memory. The one or more computer programs include instructions. When the instructions are executed by the server side, the server side is enabled to perform the method for processing a read request according to any one of the possible implementations of any one of the foregoing aspects.

According to a fourth aspect, this application provides a computer-readable storage medium, including computer instructions. When the computer instructions are run on a server side, the server side is enabled to perform the method for processing a read request according to any one of the possible implementations of any one of the foregoing aspects.

According to a fifth aspect, this application provides a computer program product. When the computer program product runs on a server side, the server side is enabled to perform the method for processing a read request according to any one of the possible implementations of any one of the foregoing aspects.

### BRIEF DESCRIPTION OF DRAWINGS

FIG. 1 is a diagram of a system architecture according to this application;
FIG. 2 is an interaction flowchart of an example of processing a read request according to this application; and
FIG. 3 is a block diagram of an example of a distributed database according to this application.

### SPECIFIC IMPLEMENTATION SOLUTION

The following describes technical solutions of this application with reference to accompanying drawings.

This application provides a method for processing a read request. The method may be applied to a distributed database for disaster recovery (which may also be referred to as a "distributed disaster recovery cluster", and is in contrast to a distributed primary cluster) in a disaster recovery scenario. Data of the distributed primary cluster is backed up in the distributed disaster recovery cluster. In other words, data stored in the distributed disaster recovery cluster is consistent with data stored in the distributed primary cluster.

In the method, when an application has a data read service, the application accesses the distributed disaster recovery cluster, and the distributed disaster recovery cluster processes the read request of the application. In other words, the data read service of the application is taken over by the distributed disaster recovery cluster, and the distributed disaster recovery cluster can process the read request of the application when ensuring read consistency. It should be noted that in this application, the distributed disaster recovery cluster has a same meaning as the distributed database for disaster recovery.

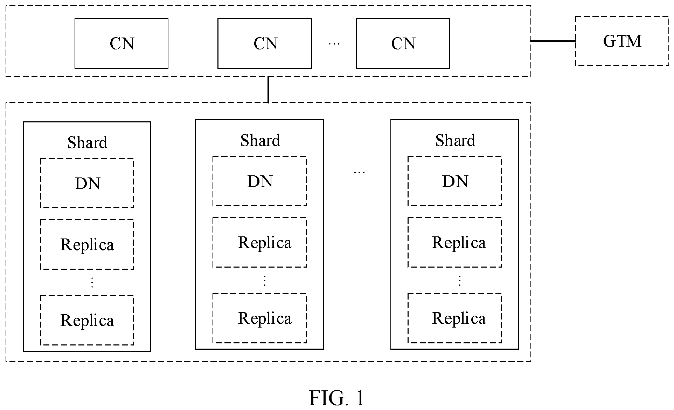

FIG. 1 is an example diagram of a system architecture of a distributed database for disaster recovery according to this application. The distributed database includes a plurality of coordinator nodes (coordinator node, CN) and a plurality of shards, and each shard may include a plurality of data nodes (Data Node, DN) and a replica that belongs to each DN. It should be noted that, for ease of description, the distributed database for disaster recovery is briefly referred to as a "distributed database" in the following. In other words, unless otherwise specified, the distributed database in the following means the distributed database for disaster recovery.

The CN is used for communication between an application layer and another node or module in the distributed database, and the DN and a replica in the DN are used to store data.

It should be noted that the system architecture of the distributed database shown in FIG. 1 is merely used as an example, and does not constitute a limitation on this application. In specific implementation, the distributed database may include only one CN.

Before the method for processing a read request provided in this application is described in detail, some nouns used in this application are first described.

### Playback progress

When a secondary device (for example, a distributed disaster recovery cluster) synchronizes data from a primary device (for example, a distributed primary cluster), synchronization is usually implemented by replicating transaction logs of a transaction and executing these logs. This behavior is referred to as playback. The playback progress generally means a synchronization progress of the secondary device.

The playback progress is usually indicated by a commit sequence number (commit sequence number, CSN) of the transaction. After the secondary device completes replication and execution of a transaction log of a specific transaction, the commit sequence number of the transaction increases by 1 correspondingly. Therefore, a larger commit sequence number indicates a faster playback progress, and a smaller commit sequence number indicates a slower playback progress.

In this application, the playback progress includes a playback progress of a coordinator node and a playback progress of a shard.

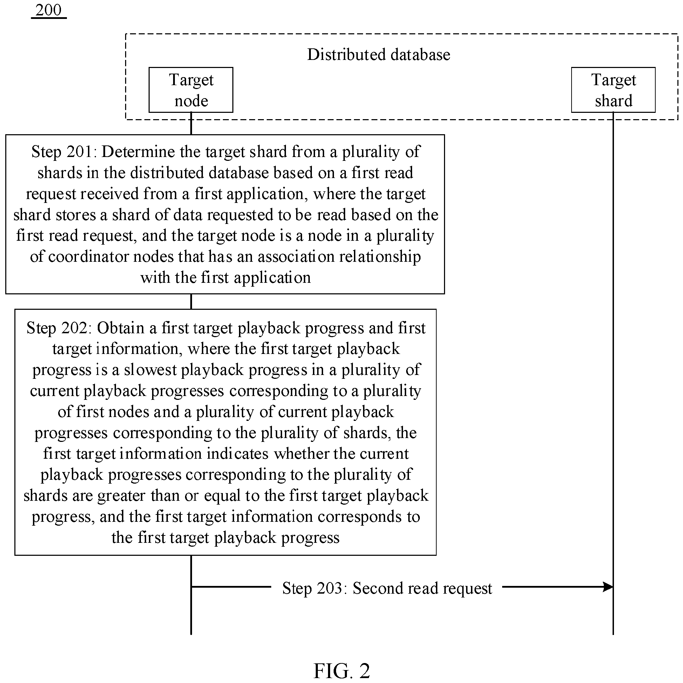

The following uses the distributed database shown in FIG. 1 as an example to describe the method for processing a read request provided in this application with reference to FIG. 2. FIG. 2 is an interaction flowchart of an example of a method 200 for processing a read request according to this application.

Step 201: A target node in the plurality of coordinator nodes (for example, an example of a first node) in the distributed database determines a target shard from the plurality of shards in the distributed database based on a first read request received from a first application, where the target shard stores a shard of data requested to be read based on the first read request, and the target node is a node in the plurality of coordinator nodes that has an association relationship with the first application.

For example, it is assumed that the distributed database is deployed as a database for processing a read request of the first application. In this case, when the first application needs to read data in a distributed primary cluster, the first read request used to read the data arrives at the distributed database. Specifically, the first read request arrives at a coordinator node in the plurality of coordinator nodes that has an association relationship with the first application. For ease of description, the coordinator node in the plurality of coordinator nodes that has an association relationship with the first application is referred to as a target node. That is, the first request arrives at the target node. It should be noted that a plurality of coordinator nodes, that is, a plurality of target nodes in the plurality of coordinator nodes may have the association relationship with the first application. In this case, when the first application needs to read the data in the distributed primary cluster, all the target nodes that have the association relationship with the first application receive the read request from the first application. The following describes the method by using one of the target nodes that have the association relationship with the first application as an example. For an action performed by another target node, refer to related descriptions of the target node in this application. For brevity, details are not described in this application again.

After receiving the first read request, the target node may determine the target shard by parsing the first read request. Then, the target node performs step 202: The target node obtains a first target playback progress and first target information, where the first target playback progress is a slowest playback progress in a plurality of current playback progresses corresponding to the plurality of first nodes and a plurality of current playback progresses corresponding to the plurality of shards, the first target information indicates whether the current playback progresses corresponding to the plurality of shards are greater than or equal to the first target playback progress, and the first target information corresponds to the first target playback progress. It should be noted that the target node may determine a plurality of target shards based on the first read request. In other words, to obtain the data requested by the first application, the target node needs to obtain the data from the plurality of target shards. The following describes the method by using one target shard as an example. For an action performed by another target shard, refer to related descriptions of the target shard in this application. For brevity, details are not described in this application again.

Optionally, the first target playback progress and the first target information may be determined in the following two manners:

### Manner 1

After the distributed database starts working, one coordinator node in the distributed database may trigger all coordinator nodes including the coordinator node and all shards to periodically obtain respective current playback progresses. Then, the coordinator node obtains a plurality of current playback progresses, and the plurality of current playback progresses are in a one-to-one correspondence with all the coordinator nodes including the coordinator node and all the shards.

Then, the coordinator node may determine the first target playback progress based on the plurality of current playback progresses. For example, the coordinator node determines a slowest playback progress in the plurality of current playback progresses as the first target playback progress. After obtaining the first target playback progress, the coordinator node may further determine the first target information.

For example, the coordinator node may compare the first target playback progress with a current playback progress corresponding to each coordinator node and each shard, generate the first target information based on a comparison result, and indicate, by using the first target information, whether the current playback progress corresponding to each coordinator node and each shard is greater than or equal to the first target playback progress.

For example, the first target information may include identification information of a coordinator node and a shard whose current playback progresses are greater than or equal to the first target playback progress. Alternatively, the first target information may include identification information of a coordinator node and a shard whose current playback progresses each are less than the first target playback progress. Alternatively, the first target information may include identification information of each coordinator node, indication information indicating whether a current playback progress corresponding to the coordinator node is greater than or equal to the first target playback progress, identification information of each shard, and indication information indicating whether a current playback progress corresponding to the shard is greater than or equal to the first target playback progress.

It should be noted that, the target node and the coordinator node that determines the first target playback progress and that generates the first target information in Manner 1 may be a same coordinator node, or may be different coordinator nodes. If the target node and the coordinator node are the different coordinator nodes, the target node may obtain the first target playback progress and the first target information from the coordinator node that determines the first target playback progress and the first target information in Manner 1.

It should be noted that, in Manner 1, to avoid the coordinator node from failing to determine the first target playback progress and the first target information successfully when the coordinator node is faulty, a coordinator node in the distributed database other than the coordinator node may also perform an action performed by the coordinator node, or only perform an action of triggering all the coordinator nodes including the coordinator node and all the shards to periodically obtain respective current playback progresses. In this case, when the coordinator node is faulty, the another coordinator node may take over work of the coordinator node. In addition, to ensure that a remedial measure can be taken in a timely manner when the coordinator node is faulty, a monitoring module may be deployed in the distributed database. The monitoring module is configured to monitor in real time whether the coordinator node is faulty.

### Manner 2

After the distributed database starts working, each of the plurality of coordinator nodes in the distributed database may trigger all coordinator nodes including the coordinator node and all shards to periodically obtain respective current playback progresses. For each coordinator node that triggers all the coordinator nodes including the coordinator node and all the shards to obtain respective current playback progresses, after obtaining the current playback progresses of all the coordinator nodes including the coordinator node and all the shards, the coordinator node may determine one playback progress based on a plurality of current playback progresses. For ease of description, the playback progress determined based on the plurality of current playback progresses is referred to as a target playback progress. After obtaining the target playback progress, the coordinator node may further generate target information corresponding to the target playback progress. For a specific method in which each coordinator node determines the target playback progress and generates the target information, refer to the related descriptions in Manner 1. For brevity, details are not described herein again.

For the plurality of coordinator nodes, a plurality of target playback progresses and a plurality of pieces of target information are obtained. In this case, the first target playback progress may be determined based on the plurality of target playback progresses. For example, a fastest playback progress in the plurality of target playback progresses may be determined as the first target playback progress. Correspondingly, the first target information is determined based on the plurality of pieces of target information. For example, target information in the plurality of pieces of target information corresponding to the first target playback progress may be determined as the first target information.

It should be noted that, in Manner 2, the plurality of coordinator nodes may notify a specific coordinator node in the plurality of coordinator nodes of the target playback progresses determined by the coordinator nodes and the target information generated by the coordinator nodes. The coordinator node determines the first target playback progress based on the plurality of target playback progresses, and determines the first target information based on the plurality of pieces of target information.

In addition, the target node and a coordinator node responsible for determining the first target playback progress and the first target information may be a same coordinator node, or may be different coordinator nodes. If the target node and the coordinator node are the different coordinator nodes, the target node may obtain the first target playback progress and the first target information from the coordinator node.

Optionally, in an implementation, the distributed database may include a management module, and the management module may record the first target playback progress and the first target information.

For Manner 1, after determining the first target playback progress and generating the first target information, the coordinator node may send the first target playback progress and the first target information to the management module. The management module may store the first target playback progress and the first target information after the first target playback progress and the first target information arrive. In this case, when receiving a data read request from the first application, the target node may query the management module for the first target playback progress and the first target information.

For Manner 2, after determining the target playback progress and generating the target information, each coordinator node may send the target playback progress and the target information to the management module. After a specific target playback progress and target information corresponding to the target playback progress arrive, the management module may compare the target playback progress with a currently stored target playback progress (for example, a second target playback progress). If the target playback progress is greater than the second target playback progress, the management module may update the currently stored target playback progress from the second target playback progress to the target playback progress, and update stored target information from second target information to the target information corresponding to the target playback progress. In this case, the target playback progress is the first target playback progress, and the target information corresponding to the target playback progress is the first target information.

It should be noted that the second target playback progress and the second target information may be determined by a specific coordinator node in the plurality of coordinator nodes, and arrive at the management module before the first target playback progress and the first target information. In addition, a coordinator node that determines the second target playback progress and the second target information and the coordinator node that determines the first target playback progress and the first target information may be a same coordinator node, or may be different coordinator nodes. This is not limited in this application.

Optionally, in an implementation, a current playback progress corresponding to a shard in the distributed database may be determined based on a current playback progress corresponding to a data node (for example, an example of a second node) included in the shard and a current playback progress corresponding to a replica included in the shard.

The following uses an example in which a commit sequence number indicates a playback progress to describe a method for determining the current playback progress corresponding to the shard.

For example, a specific shard includes one data node and two replicas. For ease of description, the two replicas are denoted as a replica 1 and a replica 2. It is assumed that when the coordinator node obtains a current playback progress corresponding to the shard, a commit sequence number corresponding to the data node is 100, a commit sequence number corresponding to the replica 1 is 50, and a commit sequence number corresponding to the replica 2 is 80. In this case, the coordinator node may determine a median 80 in the three commit sequence numbers, namely, 50, 80, and 100 as the current playback progress corresponding to the shard.

It should be understood that using a median in a current playback progress corresponding to the second node and a plurality of current playback progresses corresponding to a plurality of replicas as the current playback progress corresponding to the shard is merely an example for description, and does not constitute a limitation on this application. In specific implementation, a maximum value, a minimum value, or an average value of the current playback progress corresponding to the second node and the plurality of current playback progresses corresponding to the plurality of replicas may be used as the current playback progress corresponding to the shard. This is not limited in this application.

After obtaining the first target playback progress and the first target information, the target node may perform step 203: If a current playback progress corresponding to the target shard is greater than or equal to the first target playback progress, the target node sends a second read request generated based on the first read request to the target shard, where the second read request carries the first target playback progress.

For example, it is assumed that the first target information indicates that the current playback progress corresponding to the target shard is greater than or equal to the first target playback progress. Because the current playback progress corresponding to the target shard is greater than or equal to the first target playback progress, it indicates that data corresponding to the first target playback progress may be read from the target shard. In this case, the target node may send the second read request to the target shard. The second read request carries the first target playback progress, and is used to request to read data corresponding to the first target playback progress from the target shard. After receiving the second read request, the target shard reads the data corresponding to the first target playback progress, and returns the data to the target node.

Optionally, in an implementation, step 203 may be implemented in the following manner:

The target node sends the second read request to a first replica in a plurality of replicas in the target shard. A current playback progress corresponding to the first replica is greater than or equal to the first target playback progress.

For example, it is assumed that the target shard includes one data node, a replica 1 (for example, an example of the first replica), and a replica 2. A current playback progress corresponding to the data node is 100, a current playback progress corresponding to the replica 1 is 90, a current playback progress corresponding to the replica 2 is 60, and the first target playback progress is 80. It can be learned that both the current playback progress corresponding to the data node and the current playback progress corresponding to the replica 1 are greater than the first target playback progress. In this case, in an implementation, the target node may choose to send the second read request to the data node or the replica 1. After receiving the second read request, the data node or the replica 1 reads data corresponding to the playback progress 80 and returns the data to the target node. In another implementation, to avoid affecting performance of the data node, the target node may send the second read request to the replica 1. After receiving the second read request, the replica 1 reads data corresponding to the playback progress 80 and returns the data to the target node.

Optionally, in an implementation, the management module may be a global transaction manager (global transaction manager, GTM) shown in FIG. 1.

Optionally, in an implementation, if the first target playback progress and the first target information are stored in the GTM, to avoid a case in which the first target playback progress and the first target information are temporarily unavailable after the GTM is restarted due to a fault, the first target playback progress and the first target information may be stored persistently by using ETCD when the first target playback progress and the first target information are stored in the GTM.

It should be noted that the foregoing description of the method for processing a read request is merely used as an example, and does not constitute a limitation on this application. In specific implementation, after obtaining the respective current playback progresses of all the coordinator nodes including the coordinator node and all the shards, the coordinator node may determine one target playback progress based on only the plurality of obtained current playback progresses, but does not determine the target information. The following describes cases.

### Case 1

When only one coordinator node triggers all the coordinator nodes including the coordinator node and all the shards to obtain respective current playback progresses, a target playback progress determined by the coordinator node is the first target playback progress. The coordinator node may store the first target playback progress and the plurality of current playback progresses by using the management module or the coordinator node. After receiving the first read request, the target node may obtain the current playback progress corresponding to the target shard from the plurality of current playback progresses. Then, the target node determines, based on the current playback progress corresponding to the target shard and the first target playback progress, whether the current playback progress corresponding to the target shard is greater than or equal to the first target playback progress. If the current playback progress corresponding to the target shard is greater than the first target playback progress, the target node sends the second read request to the target shard.

### Case 2

When each of the plurality of coordinator nodes triggers all the coordinator nodes including the coordinator node and all the shards to obtain respective current playback progresses, for each coordinator node, after obtaining the current playback progresses of all the coordinator nodes including the coordinator node and all the shards, the coordinator node may determine one target playback progress based on the plurality of obtained current playback progresses, but does not determine the target information.

For the plurality of coordinator nodes, the plurality of target playback progresses and a plurality of groups of current playback progresses are obtained. Each group of current playback progresses includes a plurality of current playback progresses, and corresponds to one target playback progress and one coordinator node.

In an implementation, the plurality of coordinator nodes may notify a specific coordinator node in the plurality of coordinator nodes of the target playback progresses respectively determined by the plurality of coordinator nodes and a group of current playback progresses corresponding to the target playback progresses, and the coordinator node determines the first target playback progress based on the plurality of target playback progresses. The coordinator node may store the first target playback progress and a group of current playback progresses corresponding to the first target playback progress by using the management module or the coordinator node. After receiving the first read request, the target node may determine the current playback progress corresponding to the target shard from the group of current playback progresses. Then, the target node determines, based on the current playback progress corresponding to the target shard and the first target playback progress, whether the current playback progress corresponding to the target shard is greater than the first target playback progress. If the current playback progress corresponding to the target shard is greater than the first target playback progress, the target node sends the second read request to the target shard.

In another implementation, after determining a target playback progress and a group of current playback progresses corresponding to the target playback progress, each coordinator node may send the target playback progress and the group of current playback progresses corresponding to the target playback progress to the management module. After a specific target playback progress and a group of current playback progresses corresponding to the target playback progress arrive, the management module may compare the target playback progress with a currently stored target playback progress (for example, the second target playback progress). If the target playback progress is greater than the second target playback progress, the management module may update the currently stored target playback progress from the second target playback progress to the target playback progress, and update a group of stored current playback progresses from a group of current playback progresses corresponding to the second target playback progress to the group of current playback progresses corresponding to the target playback progress. In this case, the target playback progress is the first target playback progress.

After receiving the first read request, the target node may query the management module for the first target playback progress and a group of current playback progresses corresponding to the first target playback progress, and determine the current playback progress corresponding to the target shard from the group of current playback progresses. Then, the target node determines, based on the first target playback progress and the current playback progress corresponding to the target shard, whether the current playback progress corresponding to the target shard is greater than the first target playback progress. If the current playback progress corresponding to the target shard is greater than the first target playback progress, the target node sends the second read request to the target shard. It should be understood that sequence numbers of the processes do not mean execution sequences in various embodiments of this application. The execution sequences of the processes should be determined based on functions and internal logic of the processes, and should not be construed as any limitation on the implementation processes of this application.

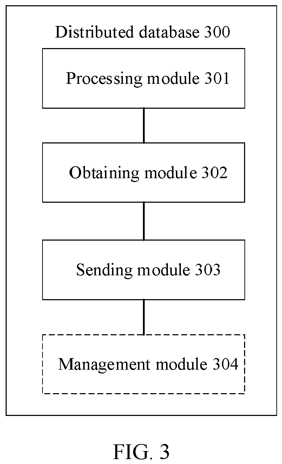

The foregoing describes in detail the method for processing a read request provided in this application with reference to FIG. 1 to FIG. 2. The following describes a distributed database in this application with reference to FIG. 3. It should be understood that the descriptions of the method embodiment correspond to descriptions of an embodiment of a distributed database. Therefore, for a part that is not described in detail, refer to the foregoing method embodiment.

FIG. 3 is a block diagram of an example of a distributed database 300 according to this application. The distributed database 300 includes a processing module 301, an obtaining module 302, and a sending module 303. The processing module 301, the obtaining module 302, and the sending module 303 may be deployed on a CN in the distributed database shown in FIG. 1.

The processing module 301 is configured to determine a target shard from the plurality of shards based on a first read request received from a first application, where the target shard stores data requested to be read based on the first read request, and the target node is a node in the plurality of first nodes that has an association relationship with the first application.

The obtaining module 302 is configured to obtain a first target playback progress and first target information, where the first target playback progress is a slowest playback progress in a plurality of current playback progresses corresponding to the plurality of first nodes and a plurality of current playback progresses corresponding to the plurality of shards, the first target information indicates whether the plurality of current playback progresses corresponding to the plurality of shards are greater than or equal to the first target playback progress, and the first target information corresponds to the first target playback progress.

The sending module 303 is configured to: if a current playback progress corresponding to the target shard is greater than or equal to the first target playback progress, send a second read request generated based on the first read request to the target shard, where the second read request carries the first target playback progress.

It should be understood that the distributed database 300 in this application may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the method for processing a read request shown in FIG. 2 may be implemented by using software, the modules of the distributed database 300 may be software modules.

Optionally, in an implementation solution, the distributed database further includes a management module 304. When obtaining the first target playback progress and the first target information, the obtaining module 302 is specifically configured to obtain the first target playback progress and the first target information from the management module 304.

Optionally, in an implementation solution, before the first target playback progress and the first target information arrive at the management module, a second target playback progress and second target information already arrive at the management module and are stored in the management module, and the second target information corresponds to the second target playback progress; and the management module 304 is configured to: after the first target playback progress arrives at the management module, update a stored current playback progress from the second target playback progress to the first target playback progress, and update stored target information from the second target information to the first target information, where the first target playback progress is greater than the second target playback progress.

Optionally, in an implementation solution, a first node that determines the first target playback progress and the first target information is different from a first node that determines the second target playback progress and the second target information.

Optionally, in an implementation solution, each shard includes one data node and a plurality of replicas, and a current playback progress corresponding to the shard is determined based on a current playback progress corresponding to the second node included in the shard and a plurality of current playback progresses corresponding to the plurality of replicas.

Optionally, in an implementation solution, if a commit sequence number indicates a playback progress, the current playback progress corresponding to the shard is a median in the current playback progress corresponding to the second node and the plurality of current playback progresses corresponding to the plurality of replicas.

Optionally, in an implementation solution, when sending the second read request generated based on the first read request to the target shard, the sending module 303 is specifically configured to send the second read request to a first replica in the target shard, where a current playback progress corresponding to the first replica is greater than or equal to the first target playback progress, and the first replica is one of a plurality of replicas included in the target shard.

Optionally, in an implementation solution, the first application accesses the distributed database in a nearby access manner.

The distributed database 300 according to this application may correspondingly perform the method described in this application, and the foregoing and other operations or functions of the units in the distributed database 300 are separately used to implement corresponding procedures of the method in FIG. 2. For brevity, details are not described herein again.

This application further provides a server side. The distributed database shown in FIG. 1 and/or FIG. 3 is deployed on the server side. The server side includes a processor, a memory, and one or more computer programs. The one or more computer programs are stored in the memory. The one or more computer programs include instructions. When the instructions are executed by the server side, the server side is enabled to perform the method for processing a read request according to any one of the possible implementations of any one of the foregoing aspects.

This application further provides a computer storage medium. The computer storage medium stores computer instructions, and when the computer instructions are run on an electronic device, the electronic device is enabled to perform the foregoing related method steps to implement the method for processing a read request in the foregoing embodiment.

This application further provides a computer program product. When the computer program product runs on a computer, the computer is enabled to perform the foregoing related steps to implement the method for processing a read request in the foregoing embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by a hardware or software solution depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described system, server side, and units, refer to corresponding processes in the foregoing method embodiment, and details are not described herein again.

In the several embodiments provided in this application, it should be understood that the disclosed system, server side and method may be implemented in other manners. For example, the described server side embodiment is merely an example. For example, division into the units is merely logical function division and may be another division solution in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the server side or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the method described in an embodiment of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation solutions of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing a read request, applied to a distributed database for disaster recovery, wherein the distributed database comprises a plurality of first nodes and a plurality of shards for storing data, and the method comprises:
determining, by a target node in the plurality of first nodes, a target shard from the plurality of shards based on a first read request received from a first application, wherein the target shard stores data requested to be read based on the first read request, and the target node is a node in the plurality of first nodes that has an association relationship with the first application;
obtaining, by the target node, a first target playback progress and first target information, wherein the first target playback progress is a slowest playback progress in a plurality of current playback progresses corresponding to the plurality of first nodes and a plurality of current playback progresses corresponding to the plurality of shards, the first target information indicates whether the plurality of current playback progresses corresponding to the plurality of shards are greater than or equal to the first target playback progress, and the first target information corresponds to the first target playback progress; and
if a current playback progress corresponding to the target shard is greater than or equal to the first target playback progress, sending, by the target node, a second read request generated based on the first read request to the target shard, wherein the second read request carries the first target playback progress.

2. The method according to claim 1, wherein the distributed database further comprises a management module, and the obtaining, by the target node, a first target playback progress and first target information comprises:
obtaining, by the target node, the first target playback progress and the first target information from the management module.

3. The method according to claim 2, wherein before the first target playback progress and the first target information arrive at the management module, a second target playback progress and second target information already arrive at the management module and are stored in the management module, and the second target information corresponds to the second target playback progress; and the method further comprises:
after the first target playback progress arrives at the management module, updating, by the management module, a stored current playback progress from the second target playback progress to the first target playback progress, and updating stored target information from the second target information to the first target information, wherein the first target playback progress is greater than the second target playback progress.

4. The method according to claim 3, wherein a first node that determines the first target playback progress and the first target information is different from a first node that determines the second target playback progress and the second target information.

5. The method according to any one of claims 1 to 4, wherein each shard comprises one second node and a plurality of replicas, and a current playback progress corresponding to the shard is determined based on a current playback progress corresponding to the second node comprised in the shard and a plurality of current playback progresses corresponding to the plurality of replicas.

6. The method according to claim 5, wherein if a commit sequence number indicates a playback progress, the current playback progress corresponding to the shard is a median in the current playback progress corresponding to the second node and the plurality of current playback progresses corresponding to the plurality of replicas.

7. The method according to claim 5 or 6, wherein the sending, by the target node, a second read request generated based on the first read request to the target shard comprises:
sending, by the target node, the second read request to a first replica in the target shard, wherein a current playback progress corresponding to the first replica is greater than or equal to the first target playback progress, and the first replica is one of a plurality of replicas comprised in the target shard.

8. The method according to any one of claims 1 to 7, wherein the first application accesses the distributed database in a nearby access manner.

9. A distributed database, comprising a plurality of first nodes and a plurality of shards for storing data, wherein
a target node in the plurality of first nodes is used to determine a target shard from the plurality of shards based on a first read request received from a first application, wherein the target shard stores data requested to be read based on the first read request, and the target node is a node in the plurality of first nodes that has an association relationship with the first application;
the target node is further used to obtain a first target playback progress and first target information, wherein the first target playback progress is a slowest playback progress in a plurality of current playback progresses corresponding to the plurality of first nodes and a plurality of current playback progresses corresponding to the plurality of shards, the first target information indicates whether the plurality of current playback progresses corresponding to the plurality of shards are greater than or equal to the first target playback progress, and the first target information corresponds to the first target playback progress; and
the target node is further used to: if a current playback progress corresponding to the target shard is greater than or equal to the first target playback progress, send a second read request generated based on the first read request to the target shard, wherein the second read request carries the first target playback progress.

10. The distributed database according to claim 9, wherein the distributed database further comprises a management module, and when obtaining the first target playback progress and the first target information, the target node is specifically used to obtain the first target playback progress and the first target information from the management module.

11. The distributed database according to claim 10, wherein before the first target playback progress and the first target information arrive at the management module, a second target playback progress and second target information already arrive at the management module and are stored in the management module, and the second target information corresponds to the second target playback progress; and the management module is configured to: after the first target playback progress arrives at the management module, update a stored current playback progress from the second target playback progress to the first target playback progress, and update stored target information from the second target information to the first target information, wherein the first target playback progress is greater than the second target playback progress.

12. The distributed database according to claim 11, wherein a first node that determines the first target playback progress and the first target information is different from a first node that determines the second target playback progress and the second target information.

13. The distributed database according to any one of claims 9 to 12, wherein each shard comprises one second node and a plurality of replicas, and a current playback progress corresponding to the shard is determined based on a current playback progress corresponding to the second node comprised in the shard and a plurality of current playback progresses corresponding to the plurality of replicas.

14. The distributed database according to claim 13, wherein if a commit sequence number indicates a playback progress, the current playback progress corresponding to the shard is a median in the current playback progress corresponding to the second node and the plurality of current playback progresses corresponding to the plurality of replicas.

15. The distributed database according to claim 13 or 14, wherein when sending the second read request generated based on the first read request to the target shard, the target node is specifically used to send the second read request to a first replica in the target shard, wherein a current playback progress corresponding to the first replica is greater than or equal to the first target playback progress, and the first replica is one of a plurality of replicas comprised in the target shard.

16. The distributed database according to any one of claims 9 to 15, wherein the first application accesses the distributed database in a nearby access manner.

17. A computer storage medium, comprising computer instructions, wherein when the computer instructions are run on a server side, the server side is enabled to perform the method for processing a read request according to any one of claims 1 to 8.

18. A computer program product, wherein when the computer program product runs on a computer, the computer is enabled to perform the method for processing a read request according to any one of claims 1 to 8.
